# EUROPEAN PATENT APPLICATION

(11) **EP 2 811 779 A1**
(43) Date of publication of application: **10.12.2014**
(21) Application number: 13804534.9
(22) Date of filing: 26.06.2013
(51) Int. Cl.: H04W 28/06

(54) **SYSTEM, USER EQUIPMENT AND METHOD FOR IMPLEMENTING MULTI-NETWORK JOINT TRANSMISSION**

(30) Priority: 26.07.2012 CN 201210261476
(71) Applicant: ZTE Corporation, Shenzhen, Guangdong 518057 (CN)
(72) Inventor: WANG, Xin, Shenzhen Guangdong 518057 (CN); HE, Feng, Shenzhen Guangdong 518057 (CN)
(74) Representative: Benson, Christopher
(86) International application number: PCT/CN2013/078035
(87) International publication number: WO 2013/185653

(57) **Abstract**

A system, UE and method for implementing multi-network joint transmission are provided. The system includes: a core network and an access network; the access network includes: a 3GPP access network element and a WLAN access network element; the core network comprises: a 3GPP core network element. The 3GPP access network element is connected to the core network element through a network interface, connected to the WLAN access network element through a traffic offload interface, and connected to a UE through a 3GPP wireless interface; and is used for merging received uplink user data, also used for performing traffic offload on downlink user data, to offload part of the downlink user data to the WLAN access network element. The WLAN access network element is connected to the UE through a WLAN wireless interface, for transmitting uplink user data and downlink user data between the 3GPP access network element and the UE. By adopting the present document, the network payload is reduced and the frequency band and the cost are saved.

## Description

### Technical Field

The present document relates to the mobile communication system, and in particular, to a system, user equipment and method for implementing multi-network joint transmission.

### Background of the Related Art

With continuous evolution of the wireless communication technology and the protocol standard, the mobile packet service experiences enormous development, and the data throughout capacity of the single terminal is promoting continuously. Taking a Long Term Evolution (abbreviated as LTE) system as an example, it can support the data transmission with the maximum downlink rate being 100Mbps within a bandwidth of 20M; in the subsequent LTE Advanced (abbreviated as LTE-A) system, the transmission rate of the data will be further promoted, even to 1Gbps.

The inflatable growth of the terminal data service volume makes the existing network resources unable to do what one wishes gradually, especially in the situation that the new generation communication technology (such as, the third generation mobile communication technology (3rd-generation, 3G), the LTE) is unable to be netted extensively, and the caused result is that both the user rate and the flow demand are unable to be satisfied, and the user experience is relatively bad. How to prevent and change this situation is a problem which must be considered by the operators; on one hand, the popularization of the new technology and the network deployment need to be accelerated; on the other hand, the objective of promoting the network performance fast is achieved by strengthening the existing network and technology.

As everyone knows, besides the wireless network technology provided by The 3rd Generation Partnership Project (abbreviated as 3GPP), the wireless Local Area Network which is already generally applied at present, especially the wireless LAN based on the IEEE 802.11 standard, has already been extensively applied in the focus access coverage in the family, the enterprise or even the Internet. Wherein, the technical specification proposed by the Wireless Fidelity (WiFi) Alliance (Wi-Fi Alliance) is applied most widely, so in practice, the WiFi network is often equivalent to the Wireless LAN (WLAN) network based on the IEEE 802.11 standard.

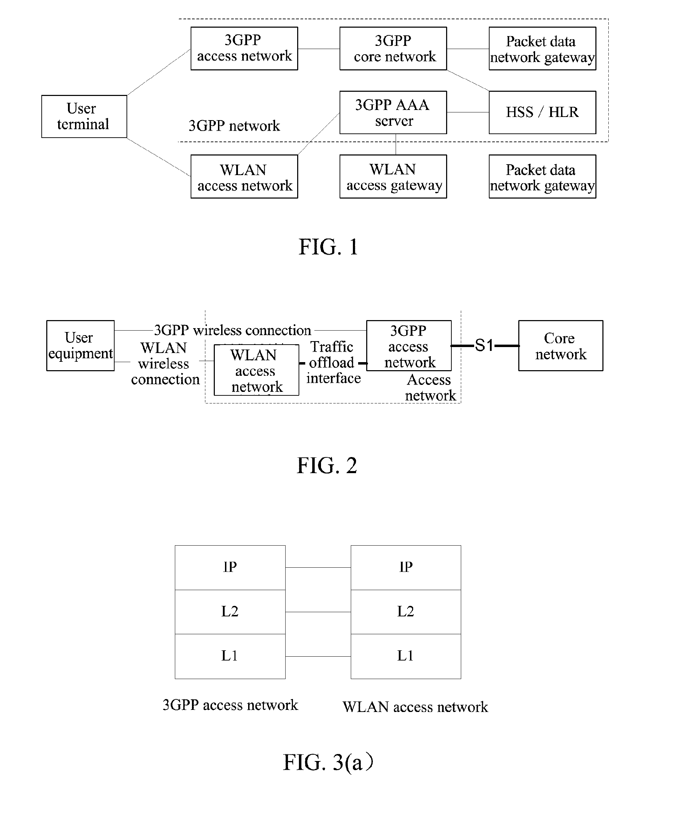

On the above-mentioned premise, some operators and companies have already proposed the joint transmission of the WLAN and the existing 3GPP network, that is, using the WLAN network to reach the objective of the Offload of the existing LTE network and promoting the network performance. Now the related protocol for the network intercommunication (Interworking) between the 3GPP network and the WLAN network is already made, as shown in FIG. 1, the current Interworking framework allows the WLAN network to use an Authentication Authorization Accounting (AAA) in the LTE network to perform the unified authentication and authorization, and at the same time it can reuse the packet data network gateway in the existing LTE network as the packet data gateway of the WLAN network, and it can also realize the unified accounting and charging of two networks, etc., and achieve the loose coupling of the two networks.

However, there are also some deficiencies in the current Interworking framework, for example:
1). the current Interworking is trigger by the user equipment (abbreviated as UE), the network side does not have an active selection right for the target network and loses the control power for the UE accessing the network, and this causes that the operator may be unable to lead the user to access its expected or optimum target network;
2). the UE does not know whether the network side (such as, the LTE network and the WLAN network) supports the interworking, so the UE may select to connect to one target network which is unable to perform the interworking with the current network;
3). in order to realize the joint transmission of the 3GPP and the WLAN, the terminal is required to turn on two sets of transceivers at the same time, and this will bring great influence on the power consumption of the terminal;
4). the data flows of the two networks need to pass through the 3GPP core network element, which causes a larger payload, and the dataflow switching is also slower when the user equipment moves between the 3GPP network and the WLAN network. In addition, the very important point is that the current framework still depends on that the operator can own an independent 3GPP network and an independent and intact WLAN network, which requires the operator to run and maintain many networks at the same time, therefore, the Capital Expenditure (abbreviated as CAPEX) is relatively great.

### Summary of the Invention

The embodiment of the present document provides a system, user equipment and method for implementing multi-network joint transmission, to overcome a disadvantage of large capital expenditure of the current operator.

The system for implementing multi-network joint transmission comprises: a core network and an access network; wherein,
the access network comprises: a 3rd Generation Partnership Project (3GPP) access network element and a Wireless Local Area Network (WLAN) access network element; and the core network comprises: a 3GPP core network element; the 3GPP access network element is connected to the core network element through a network interface, and connected to the WLAN access network element through a traffic offload interface; the 3GPP access network element is configured to connect to the user equipment through a 3GPP wireless interface, merge received uplink user data, and perform traffic offload on downlink user data, to offload part of the downlink user data to the WLAN access network element; and
the WLAN access network element is configured to connect to the user equipment through a WLAN wireless interface, and transmit the uplink user data and the downlink user data between the 3GPP access network element and the user equipment.

Preferably,
the 3GPP access network element is configured to: after offloading the downlink user data sent by the core network, send at least part of the downlink user data to the WLAN access network element through the traffic offload interface;
the WLAN access network element is configured to: send the downlink user data received from the traffic offload interface to the user equipment.

Preferably,
the 3GPP access network element is further configured to: send part of the downlink user data which are not sent to the WLAN access network element through the traffic offload interface to the user equipment through an interface with the user equipment.

Preferably,
the 3GPP access network element is configured to encapsulate at least part of downlink user data with a format of an Ethernet transmission protocol or a transmission protocol based on wireless connection, and send to the WLAN access network element through the traffic offload interface.

Preferably,
the 3GPP access network element is configured to perform traffic offload on the downlink user data at an IP layer, or a packet data convergence protocol layer, or a radio link control layer or a media access control (MAC) layer.

Preferably,
the 3GPP access network element is configured to perform traffic offload on the downlink user data according to any one or any combination of a payload of the 3GPP access network element, a payload of the WLAN access network element, quality of wireless environment where the user equipment is located or other preconfigured algorithms.

Preferably,
the WLAN access network element is configured to send the received uplink user data sent by the user equipment to the 3GPP access network element;
the 3GPP access network element is configured to merge the uplink user data sent by the user equipment and the uplink user data sent by the WLAN access network element, which belong to a same data source.

Preferably,
the 3GPP access network element is further configured to: transmit control plane signaling between the core network element and the user equipment directly.

Preferably,
in a long term evolution (LTE) network, the 3GPP access network element is connected to the core network element through an S1 interface; in a universal mobile telecommunications system (UMTS) network, the 3GPP access network element is connected to the core network element through an Iu interface.

Accordingly, the embodiment of the present document further provides a user equipment, having a Wireless Local Area Network (WLAN) access function and at least one of 3rd Generation Partnership Project (3GPP) wireless access functions, comprising: a receiving module, a sending module, an offloading module and a merging module; wherein,
the receiving module is configured to: receive downlink user data sent by a 3GPP access network element through a 3GPP wireless interface, and receive downlink user data sent by a WLAN access network element through a WLAN wireless interface;
the merging module is configured to: merge the downlink user data sent by the 3GPP access network element and the WLAN access network element received by the receiving module;
the offloading module is configured to: perform traffic offload on uplink user data to be sent; and
the sending module is configured to: send part of the uplink user data offloaded by the offloading module to the 3GPP access network element, and send other part of the uplink user data to the WLAN access network element.

Preferably,
the offloading module is configured to: perform traffic offload on the uplink user data at an IP layer, or a packet data convergence protocol layer, or a radio link control layer or a media access control (MAC) layer.

Preferably,
the offloading module is configured to: perform traffic offload on the uplink user data to be sent according to a locally preconfigured offload policy or an offload policy configured for the present user equipment by the 3GPP access network element.

Preferably,
the receiving module is further configured to receive control plane signaling sent by the 3GPP access network element directly.

Accordingly, the embodiment of the present document further provides a method for implementing multi-network joint transmission, applied at a core network side and an access network side; wherein,
the access network comprises: a 3rd Generation Partnership Project (3GPP) access network element and a Wireless Local Area Network (WLAN) access network element; and the core network comprises: a 3GPP core network element;
the method comprises:
the 3GPP access network element being connected to the core network element through a network interface, connected to the WLAN access network element through a traffic offload interface, and connected to a user equipment through a 3GPP wireless interface; merging received uplink user data; and performing traffic offload on downlink user data, to offload part of the downlink user data to the WLAN access network element; and
the WLAN access network element being connected to the user equipment through a WLAN wireless interface, and transmitting the uplink user data and the downlink user data between the 3GPP access network element and the user equipment.

Preferably,
after performing traffic offload on the downlink user data sent by the core network, the 3GPP access network element sends at least part of the downlink user data to the WLAN access network element through the traffic offload interface;
the WLAN access network element sends the downlink user data received from the traffic offload interface to the user equipment.

Preferably, the method further comprises:
the 3GPP access network element sending part of the downlink user data which are not sent to the WLAN access network element through the traffic offload interface to the user equipment through an interface with the user equipment.

Preferably,
the 3GPP access network element encapsulates at least part of downlink user data with a format of an Ethernet transmission protocol or a transmission protocol based on wireless connection, and sends to the WLAN access network element through the traffic offload interface.

Preferably,
the 3GPP access network element performs traffic offload on the downlink user data at an IP layer, or a packet data convergence protocol layer, or a radio link control layer or a media access control (MAC) layer.

Preferably,
the 3GPP access network element performs traffic offload on the downlink user data according to any one or any combination of a payload of the present user equipment, a payload of the WLAN access network element, quality of wireless environment where the user equipment is located or other preconfigured algorithms.

Preferably,
the WLAN access network element sends the received uplink user data sent by the user equipment to the 3GPP access network element;
the 3GPP access network element merges the uplink user data sent by the user equipment and the uplink user data sent by the WLAN access network element, which belong to a same data source.

Preferably, the method further comprises:
the 3GPP access network element transmitting control plane signaling between the core network element and the user equipment directly.

Accordingly, the embodiment of the present document further provides a method for implementing multi-network joint transmission, applied at a user equipment side, wherein, the user equipment has a Wireless Local Area Network (WLAN) access function and at least one of 3rd Generation Partnership Project (3GPP) wireless access functions, and the method comprises:
receiving downlink user data sent by a 3GPP access network element through a 3GPP wireless interface, and receiving downlink user data sent by a WLAN access network element through a WLAN wireless interface;
merging the received downlink user data sent by the 3GPP access network element and the WLAN access network element;
performing traffic offload on uplink user data to be sent; and
sending part of the uplink user data offloaded by the offloading module to the 3GPP access network element, and sending other part of the uplink user data to the WLAN access network element.

Preferably,
the traffic offload is performed on the uplink user data at an IP layer, or a packet data convergence protocol layer, or a radio link control layer or a media access control (MAC) layer.

Preferably,
the traffic offload is performed on the uplink user data to be sent according to a locally preconfigured offload policy or an offload policy configured for the present user equipment by the 3GPP access network element.

Preferably, the method further comprises:
receiving control plane signaling sent by the 3GPP access network element directly.

After adopting the embodiment of the present document, the operator can utilize the WLAN frequency band which does not need the license to offload the data transmission of the paid frequency band, and offload the data traffic of the 3GPP access network, which lightens the network load and saves the frequency band and cost; the operator can reuse the existing WLAN access point network element, which saves the operation and maintenance expenditure of the network side; meanwhile, the data throughput of the UE is increased, and the current multimedia service demand of the user is satisfied; in addition, the present framework also guarantees the greatest compatibility with the protocol and the terminal device, which makes the system run more rationally and high efficiently.

### Brief Description of Drawings

FIG. 1 is a diagram of a network intercommunication protocol framework of the related art;
FIG. 2 is a diagram of a joint transmission framework of the 3GPP and the WLAN network according to an embodiment of the present document;
FIG. 3(a) ∼ FIG. 3(c) are diagrams of three protocol stacks of the traffic offload interface between the 3GPP access network and the WLAN access network according to an embodiment of the present document;
FIG. 4 (a) and 4(b) are diagrams of the data offloading in the 3GPP access network according to an embodiment of the present document;
FIG. 5 is a structure diagram of a user equipment according to an embodiment of the present document;
FIG. 6 is a diagram of the joint transmission network of the LTE and the WLAN in application example one of the present document;
FIG. 7(a) ∼ 7(c) are diagrams of the protocol stacks of the traffic offload interface in application example one of the present document;
FIG. 8 (a) and 8 (b) are diagrams of the protocol stacks for transmitting the data at the WLAN air interface in application example one of the present document;
FIG. 9 is a diagram of a tunnel transmission scheme of the user equipment and the access network in application example one of the present document;
FIG. 10 (a) and 10 (b) are diagrams of the joint transmission network of the UMTS and the WLAN in application example two of the present document;
FIG. 11 (a) and 11 (b) are diagrams of the protocol stacks for transmitting the data at the WLAN air interface in application example two of the present document;
FIG. 12 is a diagram of a tunnel transmission scheme of the user equipment and the access network in application example two of the present document.

### Preferred Embodiments of the Invention

In order to make the objective, technical scheme and advantage of the present document much more clear and obvious, the embodiment of the present document is described in detail with reference to the accompanying drawings hereinafter. It should be illustrated that, in the case of not conflicting, the embodiments in the present application and features in these embodiments can be combined with each other.

As shown in FIG. 2, in the present embodiment, the system for the joint transmission of the 3GPP and WLAN network includes: a core network and an access network; wherein, the access network includes: a 3rd Generation Partnership Project (3GPP) access network element and a Wireless Local Area Network (WLAN) access network element; and the core network includes: a core network element in the 3GPP system. Wherein, the core network element and the 3GPP access network element are connected through a network interface; for example, they are connected through an S1 interface in the LTE network, and also can be connected through an Iu interface in the Universal Mobile Telecommunications System (UMTS) network; and also can be connected through a wired interface (such as, optical fiber) or a wireless interface (such as, through wireless connection based on the microwave or the 3GPP air interface protocol).

Wherein, the function and the interface of the core network element in the core network are consistent with those in the existing 3GPP network. For example, in the Evolved Packet System (EPS), the core network element includes: the Mobility Management Entity (MME), the Serving Gateway (SGW) and the Packet Data Network Gateway (PGW), etc.; in the UMTS, the core network element includes: the Serving General Packet Radio Service (GPRS) Support Node (SGSN and the Gateway GPRS Support Node (GGSN), etc.

The above-mentioned the 3GPP access network element in the LTE network can include: the Evolved Node B (abbreviated as eNB), the Relay node (abbreviated as RN) or the Home eNB (abbreviated as HeNB), etc.; and the UMTS network can include: the Radio Network Controller (abbreviated as RNC), the base station (Node B) and the Home Node B (HNB), etc. In addition, besides the function of the existing 3GPP access network element, the 3GPP access network element further possesses the function of performing traffic offload on the downlink user data and merging the uplink user data which belong to the same data source.

The above-mentioned WLAN access network element includes the WLAN Access Point (abbreviated as AP), and can also include the WLAN Access Control (abbreviated as AC) network element. The function of the WLAN access network element is similar to the function of the existing WLAN access network element, mainly responsible for the transmission of the user data; while the difference from the existing WLAN access network element is that the data transmitted by the WLAN access network element are the offloaded data interacted with the 3GPP access network element through the traffic offload interface.

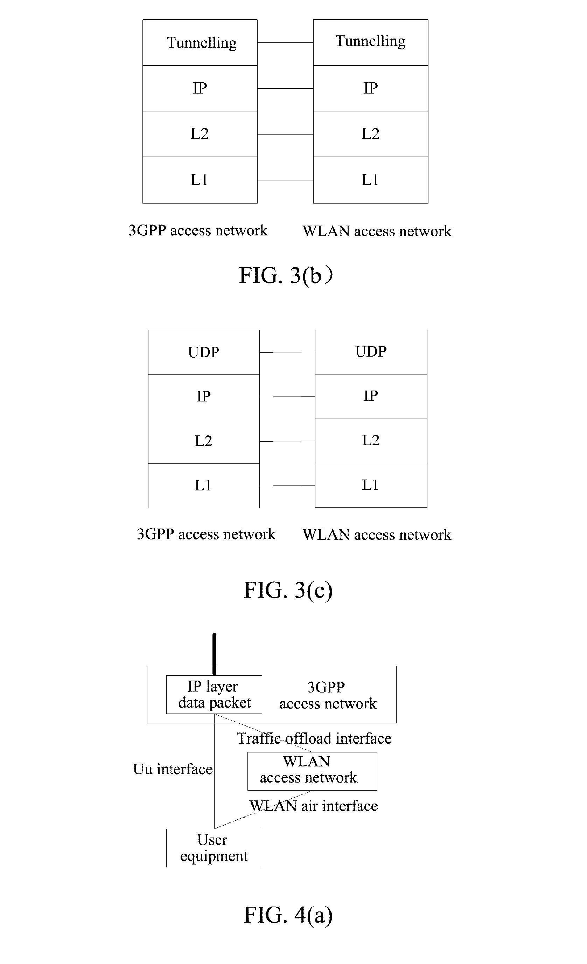

In addition, the traffic offload interface between the WLAN access network element and the 3GPP access network element is mainly responsible for transmitting the offloaded data between the 3GPP access network element and the WLAN access network element. The user data may be transmitted by adopting the Ethernet transmission protocol, for example, transmitted through the IP layer (as shown in FIG. 3 (a)) or a more high-level transmission protocol (such as, a network tunnel (Tunneling) protocol as shown in FIG. 3 (b), a User Datagram Protocol (UDP) as shown in FIG. 3 (c)); if the traffic offload interface adopts the wireless interface, then the difference from the transmission by adopting the wired interface mainly lies in that the bottom layer (that is, layer L1 and L2) transmission protocol adopts the transmission protocol based on the wireless connection.

The user equipment is a multi-mode terminal supporting at least the WLAN and one of 3GPP wireless access technologies, and it performs the data transmission with the 3GPP access network element and the WLAN access network element accordingly through the 3GPP air interface protocol and the WLAN air interface protocol respectively. Wherein, the 3GPP air interface protocol and the WLAN air interface protocol are consistent with the existing Uu interface transmission protocol and the 802.11 protocol respectively.

Preferably, the user data transmitted between the WLAN access network element and the user equipment are the offloaded user data transmitted by the 3GPP access network element to the WLAN access network element in the downlink direction; and are the offloaded user data generated by the UE in the uplink direction; the WLAN access network element needs to transmit to the 3GPP access network element through the traffic offload interface after receiving the data. Wherein, the UE performs traffic offload on the uplink user data according to the offload policy, the UE sends part of the uplink user data to the 3GPP access network after offloading, and sends the other part of the uplink user data to the WLAN access network. The offload policy can be preconfigured in the UE, and also can be configured for the UE by the 3GPP access network element.

In addition, offloading of the user data can take place at an IP layer, or a Packet Data Convergence Protocol (abbreviated as PDCP) layer, or a Radio Link Control (abbreviated as RLC) layer, or a Medium Access Control (abbreviated as MAC) layer.

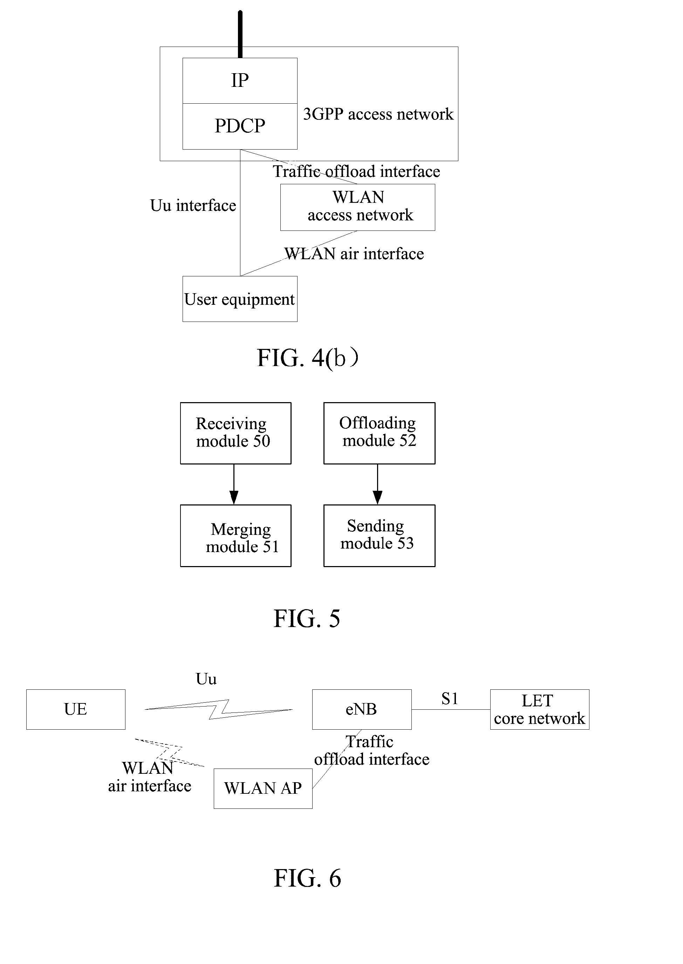

According to the difference of the offloading levels, different encapsulation forms can be adopted to encapsulate the offloaded user data. If offloading takes place in the IP layer, the sender transmits different IP data packets of the user to the receiver through different paths (that is, through the 3GPP air interface or the WLAN air interface) respectively, as shown in FIG. 4 (a); if offloading occurs in the PDCP layer, then the offloaded user data are the user data on which encapsulation processing is performed in the PDCP layer, as shown in FIG. 4 (b); similarly, it is also suitable for traffic offload in the RLC layer and the MAC layer, and will no longer go into details here.

Preferably, when the offloaded user data are transmitted through the bottom layer 802.11 protocol, the sender can also adopt the Logic Link Control layer (abbreviated as LLC) protocol over the 802.11 MAC protocol to perform the encapsulation processing; accordingly, the receiver will perform decapsulating processing similarly. Wherein, for the downlink user data, the sender is the 3GPP access network element, and the receiver is the user equipment; for the uplink user data, the sender is the user equipment, and the receiver is the 3GPP access network element.

Based on the above-mentioned system framework, the control signaling is sent to the UE directly by the 3GPP access network element, therefore, the 3GPP access network element is a leading factor of the whole system, and the WLAN access network element is only responsible for the transmission of part of the user data, that is to say, which WLAN access network is accessed by the UE specifically can fully be controlled or assisted by the 3GPP access network. In addition, because the UE is controlled by the 3GPP access network, its transceiver at the WLAN side can be controlled to be on/off by the 3GPP access network, which achieves the purpose of the power saving of the UE.

As shown in FIG. 5, in the present embodiment, a user equipment has a Wireless Local Area Network (WLAN) access function and at least one of 3rd Generation Partnership Project (3GPP) wireless access functions, including: a receiving module 50, a sending module 51, an offloading module 52 and a merging module 53; wherein,
the receiving module 50 is configured to: receive downlink user data sent by a 3GPP access network element through a 3GPP wireless interface, and receive downlink user data sent by a WLAN access network element through a WLAN wireless interface;
the merging module 51 is configured to: merge the downlink user data received by the receiving module sent by the 3GPP access network element and the WLAN access network element;
the offloading module 52 is configured to: perform traffic offload on uplink user data to be sent; and
the sending module 53 is configured to: send part of the uplink user data offloaded by the offloading module to the 3GPP access network element, and send the other part of the uplink user data to the WLAN access network element.

Preferably,
the offloading module 52 is configured to: perform traffic offload on the uplink user data at an IP layer, or a packet data convergence protocol layer, or a radio link control layer or a media access control (MAC) layer.

Preferably,
the offloading module 52 is configured to: perform traffic offload on the uplink user data according to a locally preconfigured offload policy or an offload policy configured for the present user equipment by the 3GPP access network element.

Preferably,
the receiving module 50 is further configured to receive control plane signaling sent by the 3GPP access network element directly.

Accordingly, in the present embodiment, a method for implementing multi-network joint transmission is applied at a core network and an access network side; wherein,
the access network includes: a 3rd Generation Partnership Project (3GPP) access network element and a Wireless Local Area Network (WLAN) access network element; and the core network comprises: a 3GPP core network element;
the method includes:
the 3GPP access network element being connected to the core network element through a network interface, connected to the WLAN access network element through a traffic offload interface, and connected to a user equipment through a 3GPP wireless interface; merging received uplink user data; and performing traffic offload on downlink user data, to offload part of the downlink user data to the WLAN access network element; and
the WLAN access network element being connected to the user equipment through a WLAN wireless interface, and transmitting the uplink user data and the downlink user data between the 3GPP access network element and the user equipment.

Preferably,
after performing traffic offload on the downlink user data sent by the core network, the 3GPP access network element sends at least part of the downlink user data to the WLAN access network element through the traffic offload interface;
the WLAN access network element transmits the downlink user data received from the traffic offload interface to the user equipment.

Preferably, the method further includes:
the 3GPP access network element sending part of the downlink user data which are not sent to the WLAN access network element through the traffic offload interface to the user equipment through an interface with the user equipment.

Preferably,
the 3GPP access network element encapsulates at least part of downlink user data with a format of an Ethernet transmission protocol or a transmission protocol based on wireless connection, and sends to the WLAN access network element through the traffic offload interface.

Preferably,
the 3GPP access network element performs traffic offload on the downlink user data at an IP layer, or a packet data convergence protocol layer, or a radio link control layer or a media access control (MAC) layer.

Preferably,
the 3GPP access network element performs traffic offload on the downlink user data according to any one or any combination of a payload of a present device, a payload of the WLAN access network element, quality of wireless environment where the user equipment is located or other preconfigured algorithms.

Preferably,
the WLAN access network element sends the received uplink user data sent by the user equipment to the 3GPP access network element;
the 3GPP access network element merges the uplink user data sent by the user equipment and the uplink user data sent by the WLAN access network element, which belong to a same data source.

Preferably, the method further includes:
the 3GPP access network element transmitting control plane signaling between the core network element and the user equipment directly.

Accordingly, in the present embodiment a method for implementing multi-network joint transmission is applied at a user equipment side, wherein, the user equipment has a Wireless Local Area Network (WLAN) access function and at least one of 3rd Generation Partnership Project (3GPP) wireless access functions, and the method includes:
receiving downlink user data sent by a 3GPP access network element through a 3GPP wireless interface, and receiving downlink user data sent by a WLAN access network element through a WLAN wireless interface;
merging the received downlink user data sent by the 3GPP access network element and the WLAN access network element;
performing traffic offload on uplink user data to be sent; and
sending part of the uplink user data offloaded by the offloading module to the 3GPP access network element, and sending the other part of the uplink user data to the WLAN access network element.

Preferably,
the traffic offload is performed on the uplink user data at an IP layer, or a packet data convergence protocol layer, or a radio link control layer or a media access control (MAC) layer.

Preferably,
the traffic offload is performed on the uplink user data to be sent according to a locally preconfigured offload policy or an offload policy configured for the present user equipment by the 3GPP access network element.

Preferably, the method further includes:
receiving control plane signaling sent by the 3GPP access network element directly.

The present document is further illustrated by merging different embodiments.

Application example one: the joint transmission of the LTE and the WLAN is taken as an example.

As shown in FIG. 6, the eNB is connected to the LTE core network through the S1 interface; at the Radio Access Network (RAN) side, the eNB is also connected to the WLAN AP through the traffic offload interface; wherein, the bottom layer of the data on the traffic offload interface performs the data interchange based on the Ethernet protocol; the UE transmits the data with the eNB and the WLAN AP according to the Uu interface protocol and the WLAN air interface protocol respectively.

For the control plane signaling transmitted between the access network and the UE, it is still interacted directly by the eNB and the UE through the Uu interface, and will not participate in the data offloading.

For the downlink user data, after the eNB receives the user IP data on different carriers sent by the core network through the S1 interface, the user data on different carriers are offloaded in the IP layer, the basis on which the eNB determines to offload can be the payload of the eNB and/or the WLAN AP, or the quality of the wireless environment where the UE is located (that is, the wireless environment quality of the LTE and the WLAN network measured by the UE), etc., or other preset algorithms. Certainly, the eNB can also offload the user data on other protocol layers, for example, in the PDCP layer, the RLC layer or the MAC layer, etc., and the difference lies in that now the offloaded data are the Protocol Data Units (abbreviated as PDUs) processed by the upper-layer protocol layer; for example when the offloading is performed in the PDCP layer, the offloaded user data are the PDCP PDUs.

Wherein, after offloading, the eNB transmits part of the user IP data to the corresponding UE through the Uu interface, that is, it needs to perform the data encapsulation processing in the corresponding PDCP, RLC or MAC layers; the specific mechanism is consistent with the existing air interface transmission mechanism, and will no longer go into details.

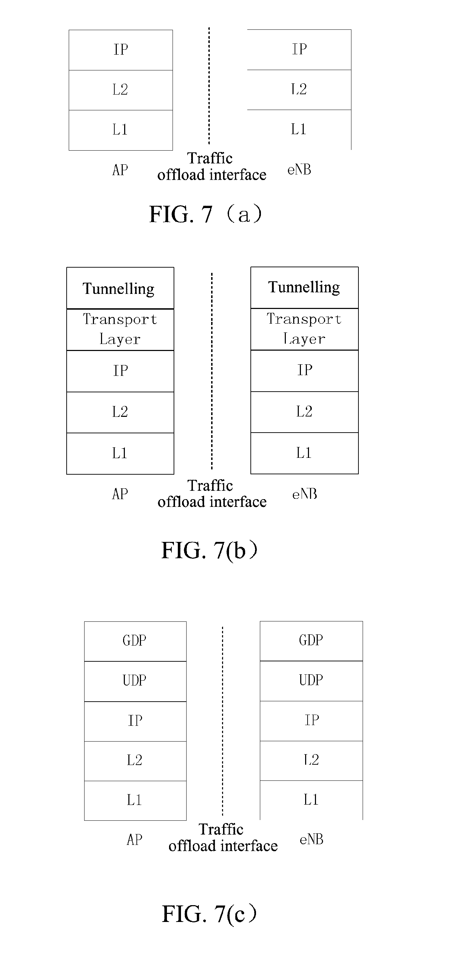

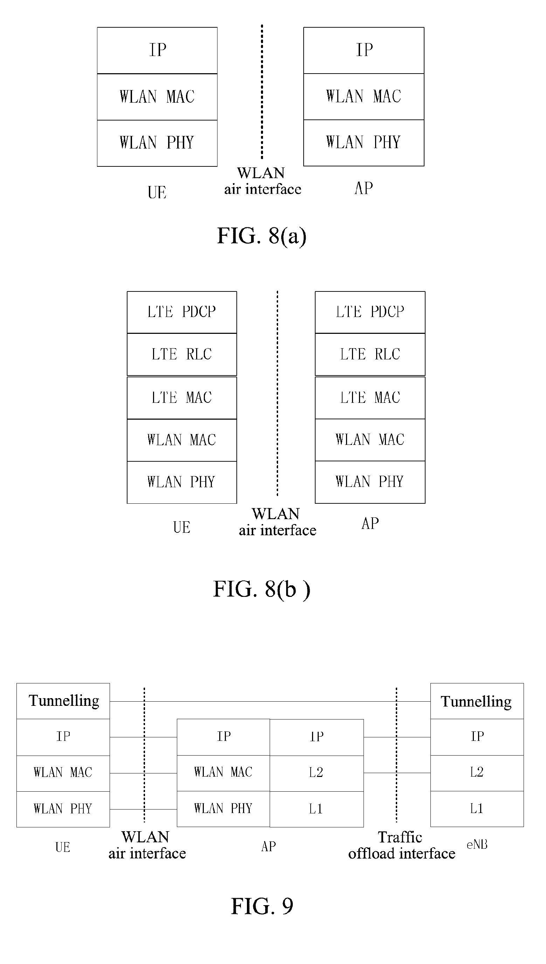

While part of the user IP data are transmitted to the WLAN AP through the traffic offload interface by the eNB, and transmitted to the corresponding UE by the WLAN AP through the WLAN air interface (that is, based on the 802.11 protocol). Wherein, the user data of the traffic offload interface can be transmitted based on the IP data packet, as show in FIG. 7 (a); now the data are the payload of the IP packet, and the source address and the target address in the IP packet header are the IP addresses of the sender and the receiver respectively; wherein, the IP addresses can be pre-configured, and also can be obtained through the negotiation by the sender and the receiver through other procedures (such as, the Dynamic Host Configuration Protocol (DHCP protocol)); or it can be encapsulated through the tunnel protocol, as shown in FIG. 7 (b), for example, through the GPRS Tunnelling Protocol (GTP), as shown in FIG. 7 (c); now the MAC PDU is the payload of the GTP data packet, and the address of the transmission layer and the port number of the GTP tunnel can be pre-configured, and also can be obtained by both the sender and the receiver through other procedures (such as, the L3 protocol procedure); the high-layer tunnel protocol can also adopt the Generic Routing Encapsulation (GRE) protocol or the Internet protocol security (IPsec) protocol, etc., or other high-layer connection protocol formats. Wherein, the user data transmitted through the WLAN air interface can be the IP data packet of the offloaded data encapsulated by the WLAN AP, as shown in FIG. 8 (a); now the offloaded data (that is, the IP packets here) are the payload of the new local IP data packet, the source address and the target address in the local IP packet header are the IP addresses of the sender and the receiver respectively, and the IP addresses can be pre-configured and also can be obtained through the negotiation by the sender and the receiver through other procedures (such as, the DHCP protocol); or it can be another transmission protocol data packet, for example, reusing the PDCP and/or the RLC and/or the MAC layer protocol of LTE, as shown in FIG. 8 (b); now the WLAN AP encapsulates the offloaded IP data packets according to the PDCP, the RLC and the MAC formats correspondingly, wherein, the parameters of each protocol layer can be configured by the eNB, and the final protocol PDU is sent as the payload of the WLAN MAC layer. Alternatively, the offloaded user data, before sending to the WLAN MAC layer, can also be further encapsulated using the LLC protocol; now the fields of the target service access node and the source service access node in the LLC data packet point to the equal protocol layers of both the sender and the receiver respectively, wherein, the offloaded data are the payload of the LLC.

The protocol stacks of the above-mentioned traffic offload interface and the WLAN air interface can be combined arbitrarily. Alternatively, an end-to-end tunnel can also be established between the UE and the eNB used for transmitting the data, as shown in FIG. 9. Wherein, the tunnel protocol can use the existing tunnel technology, such as, the IPsec protocol, the GTP protocol, or the GRE protocol, etc., and it also can be other tunnel protocols.

Preferably, the traffic offload interface and the WLAN air interface can also increase the security protection mechanism according to the actual demand, for example, through the IPSec or other tunnel security mechanisms; the implementation method of the protection is consistent with the existing security mechanism, and will no longer go into details.

The transmission path and the used interface protocol stack of the uplink user data are the same with those of the downlink user data; the difference lies in that the sender is the UE and the receiver is the eNB and the WLAN AP, which will no longer go into details here.

Certainly, the above-mentioned framework is also suitable for the situation of the combination of the RN and the HeNB, while the difference only lies in that the access network element changes, and also the backward links of the network element are different to some extent; for example, the backward link of the RN is based on the LTE air interface, and the backward link of the HeNB may also be managed by the home base station gateway, etc. However, the traffic offload interface protocols and the offloading modes among the network elements of the access network are all the same.

Application example two: the joint transmission of the UMTS network and the WLAN network is taken as the example.

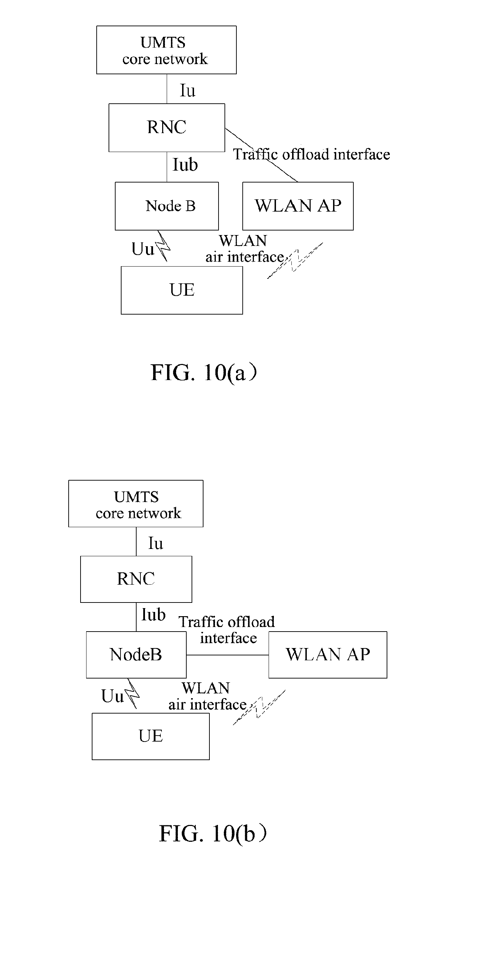

As shown in FIG. 10 (a), the RNC is connected to the core network through the Iu interface; at the RAN side, the RNC is also connected to the WLAN AP through the traffic offload interface; wherein, the bottom layer of the data on the traffic offload interface performs the data interchange based on the Ethernet protocol; the UE transmits the data with the RNC and the WLAN AP according to the Uu interface protocol and the WLAN air interface protocol respectively.

Alternatively, the traffic offload interface between the UMTS network and the WLAN AP also can be established between the NodeB and the AP, as shown in FIG. 10 (b).

For the control plane signaling transmitted between the access network and the UE, it is still interacted by the RNC and the UE through the Uu interface, and will not participate in the offloading.

For the downlink user data, after the RNC receives the user IP data on different carriers sent by the core network through the Iu interface, the user data on different carriers are offloaded in the MAC layer, the basis on which the RNC determines to offload can be the payload of the RNC, the NodeB, and/or the WLAN AP, or the quality of the wireless environment where the UE is located (that is, the wireless environment quality of the UMTS and the WLAN network measured by the UE), etc., or other preset algorithms. The RNC can also offload the user data on other protocol layers, for example, in the IP layer, the PDCP layer, or the RLC layer, etc., and the difference lies in that now the offloaded user data are the PDUs processed by the upper-layer protocol layer.

Wherein, after offloading, the RNC transmits part of the user IP data to the corresponding UE through the Uu interface, that is, it needs to perform data encapsulation processing in the corresponding PDCP, RLC or MAC layers; the specific mechanism is consistent with the existing air interface transmission mechanism, and will no longer go into details.

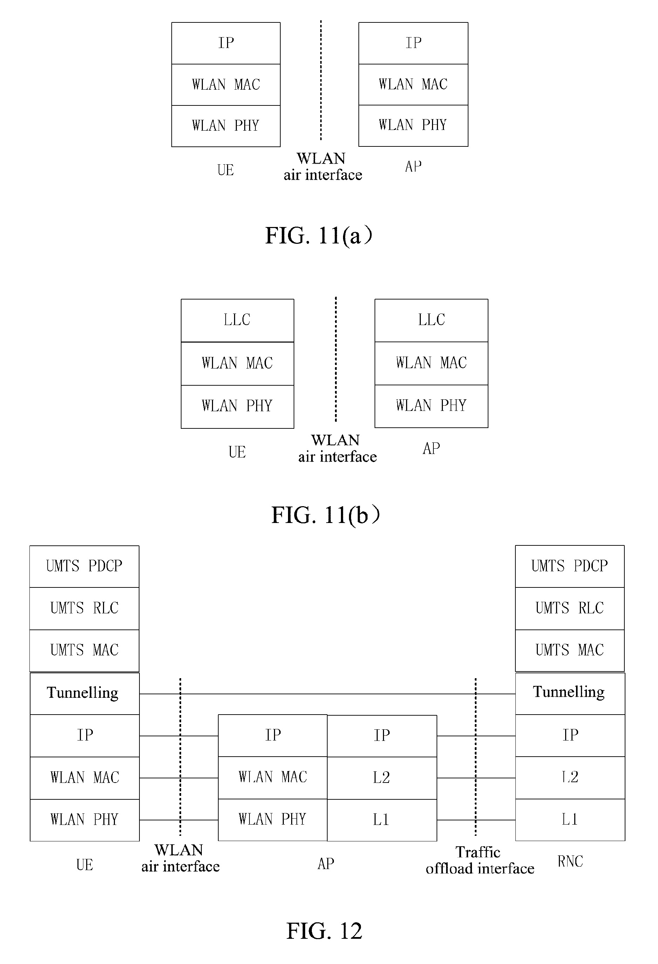

While after the layer 2 protocol (that is, the UMTS PDCP, RLC or MAC layer) encapsulation processing is performed on part of the user data by the RNC, the RNC transmits the MAC protocol data packets to the WLAN AP through the traffic offload interface, and the WLAN AP transmits the packets to the corresponding UE through the WLAN air interface (that is, based on the 802.11 protocol). Wherein, the user data of the traffic offload interface can be transmitted based on the IP data packet, as show in FIG. 6 (a); now the MAC PDU is the payload of the IP packet, and the source address and the target address in the IP packet header are the IP addresses of the sender and the receiver respectively; wherein, the IP addresses can be pre-configured, and also can be obtained through the negotiation by the sender and the receiver through other procedures (such as, the DHCP protocol), or it can be encapsulated through the tunnel protocol, as shown in FIG. 7 (b), for example, through the GTP protocol, as shown in FIG. 7 (c); now the MAC PDU is the payload of the GTP data packet, and the address of the transmission layer and the port number of the GTP tunnel can be pre-configured in advance, and also can be obtained by both the sender and the receiver through other procedures (such as, the L3 protocol procedure); the high-layer tunnel protocol can also adopt the GRE protocol or the IPsec protocol, etc., or other high-layer connection protocols. Wherein, the user data transmitted through the WLAN air interface can be the raw data obtained after offloading, and also can be the IP data packet after encapsulating the offloaded data by the WLAN AP, as shown in FIG. 10 (a); now the offloaded data (that is, the MAC PDU packets here) are the payload of the IP data packet directly, the source address and the target address in the IP packet header are the IP addresses of the sender and the receiver respectively, and the IP addresses can be pre-configured and also can be obtained through the negotiation by the sender and the receiver through other procedures (such as, the DHCP protocol); or the data can be other transmission protocol data packets, for example, LLCs, as shown in FIG. 11 (b); now the fields of the target service access node and the source service access node in the LLC data packet point to the MAC layers of both the sender and the receiver respectively, wherein, the offloaded data are the payload of the LLC.

The protocol stacks of the above-mentioned traffic offload interface and the WLAN air interface can be combined arbitrarily. Alternatively, an end-to-end tunnel can also be established between the UE and the RNC used for transmitting the data, as shown in FIG. 12. Wherein, the tunnel protocol can adopt the IPsec protocol, the GTP protocol, or the GRE protocol, etc., and also can be other tunnel protocols.

Preferably, the traffic offload interface and the WLAN air interface can also increase the security protection mechanism according to the actual demand, for example, through the IPSec or other tunnel security mechanisms; the implementation method of the protection is consistent with the existing security mechanism, and will no longer go into details.

The transmission path and the used interface protocol stack of the uplink user data are the same with those of the downlink user data; the difference lies in that the sender is the UE and the receiver is the RNC and the WLAN AP, which will no longer go into details here.

In addition, if the traffic offload interface is established between the NodeB and the WLAN AP, then the NodeB needs to offload the user data, the basis on which the NodeB determines to offload can be the preset algorithm of the NodeB, and also can be triggered by the RNC. The data offloading method performed on the NodeB and the offloaded data transmission mechanism on the traffic offload interface are similar to the processing method of the RNC, and will not go into details.

The above-mentioned framework is also suitable for the situation of the HNB, etc., while the difference only lies in that the access network element changes, and also the backward links of the network element are different to some extent; for example, the backward link of the HNB may also be managed by the home base station gateway, etc. However, the traffic offload interface protocols and the offloading modes among the network elements of the access network are all the same.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present document is not limit to any specific form of the combination of the hardware and software.

The above description is only the preferred embodiments of the present document and is not intended to limit the protection scope of the present document. The present document can have a variety of other embodiments according to the content of the invention. Those skilled in the art can make the corresponding modifications and variations according to the present document without departing from the spirit and essence of the present document. All of modifications, equivalents and/or variations without departing from the spirit and essence of the present document should be embodied in the scope of the appended claims of the present document.

### Industrial Applicability

After adopting the embodiment of the present document, the operator can utilize the WLAN frequency band which does not need the license to offload the data transmission of the paid frequency band, and offload the data traffic of the 3GPP access network, which lightens the network load and saves the frequency band and cost; the operator can reuse the existing WLAN access point network element, which saves the operation and maintenance expenditure of the network side; meanwhile the data throughput of the UE is increased, and the current multimedia service demand of the user is satisfied; in addition, the present framework also guarantees the greatest compatibility with the protocol and the terminal device, which makes the system run more rationally and high efficiently.

## Claims

1. A system for implementing multi-network joint transmission, comprising: a core network and an access network; wherein,
the access network comprises: a 3rd Generation Partnership Project (3GPP) access network element and a Wireless Local Area Network (WLAN) access network element; and the core network comprises: a 3GPP core network element; wherein, the 3GPP access network element is connected to the core network element through a network interface, and connected to the WLAN access network element through a traffic offload interface; the 3GPP access network element is configured to connect to the user equipment through a 3GPP wireless interface, merge received uplink user data, and perform traffic offload on downlink user data, to offload part of the downlink user data to the WLAN access network element; and
the WLAN access network element is configured to connect to the user equipment through a WLAN wireless interface, and transmit the uplink user data and the downlink user data between the 3GPP access network element and the user equipment.

2. The system according to claim 1, wherein,
the 3GPP access network element is configured to perform traffic offload on downlink user data to offload part of the downlink user data to the WLAN access network element by means of:
after offloading the downlink user data sent by the core network, sending at least part of the downlink user data to the WLAN access network element through the traffic offload interface;
the WLAN access network element is configured to transmit the downlink user data between the 3GPP access network element and the user equipment by means of:
sending the downlink user data received from the traffic offload interface to the user equipment.

3. The system according to claim 2, wherein,
the 3GPP access network element is further configured to: send part of the downlink user data which are not sent to the WLAN access network element through the traffic offload interface to the user equipment through an interface with the user equipment.

4. The system according to claim 2, wherein,
the 3GPP access network element is configured to send at least part of the downlink user data to the WLAN access network element through the traffic offload interface by means of:
encapsulating at least part of the downlink user data with a format of an Ethernet transmission protocol or a transmission protocol based on wireless connection, and sending to the WLAN access network element through the traffic offload interface.

5. The system according to claim 1, wherein,
the 3GPP access network element is configured to perform traffic offload on the downlink user data by means of:
performing traffic offload on the downlink user data at an IP layer, or a packet data convergence protocol layer, or a radio link control layer or a media access control (MAC) layer.

6. The system according to any one of claims 1∼5, wherein,
the 3GPP access network element is configured to perform traffic offload on the downlink user data by means of:
performing traffic offload on the downlink user data according to any one or any combination of a payload of the 3GPP access network element, a payload of the WLAN access network element, quality of wireless environment where the user equipment is located or other preconfigured algorithms.

7. The system according to claim 1, wherein,
the WLAN access network element is configured to transmit the uplink user data between the 3GPP access network element and the user equipment by means of:
sending the received uplink user data sent by the user equipment to the 3GPP access network element;
the 3GPP access network element is configured to merge the received uplink user data by means of:
merging the uplink user data sent by the user equipment and the uplink user data sent by the WLAN access network element, which belong to a same data source.

8. The system according to claim 1, wherein,
the 3GPP access network element is further configured to: transmit control plane signaling between the core network element and the user equipment directly.

9. The system according to claim 1, wherein,
in a long term evolution (LTE) network, the 3GPP access network element is connected to the core network element through an S1 interface; in a universal mobile telecommunications system (UMTS) network, the 3GPP access network element is connected to the core network element through an Iu interface.

10. A user equipment, having a Wireless Local Area Network (WLAN) access function and at least one of 3rd Generation Partnership Project (3GPP) wireless access functions, comprising: a receiving module, a sending module, an offloading module and a merging module; wherein,
the receiving module is configured to: receive downlink user data sent by a 3GPP access network element through a 3GPP wireless interface, and receive downlink user data sent by a WLAN access network element through a WLAN wireless interface;
the merging module is configured to: merge the downlink user data received by the receiving module sent by the 3GPP access network element and the WLAN access network element;
the offloading module is configured to: perform traffic offload on uplink user data to be sent; and
the sending module is configured to: send part of the uplink user data offloaded by the offloading module to the 3GPP access network element, and send other part of the uplink user data to the WLAN access network element.

11. The user equipment according to claim 10, wherein,
the offloading module is configured to perform traffic offload on uplink user data to be sent by means of:
performing traffic offload on the uplink user data at an IP layer, or a packet data convergence protocol layer, or a radio link control layer or a media access control (MAC) layer.

12. The user equipment according to claim 10 or 11, wherein,
the offloading module is configured to perform traffic offload on uplink user data to be sent by means of:
performing traffic offload on the uplink user data to be sent according to a locally preconfigured offload policy or an offload policy configured for the present user equipment by the 3GPP access network element.

13. The system according to claim 10, wherein,
the receiving module is further configured to receive control plane signaling sent by the 3GPP access network element directly.

14. A method for implementing multi-network joint transmission, applied at a core network and an access network side; wherein,
the access network comprises: a 3rd Generation Partnership Project (3GPP) access network element and a Wireless Local Area Network (WLAN) access network element; and the core network comprises: a 3GPP core network element;
the method comprises:
the 3GPP access network element being connected to the core network element through a network interface, connected to the WLAN access network element through a traffic offload interface, and connected to a user equipment through a 3GPP wireless interface; merging received uplink user data; and performing traffic offload on downlink user data, to offload part of the downlink user data to the WLAN access network element; and
the WLAN access network element being connected to the user equipment through a WLAN wireless interface; transmitting the uplink user data and the downlink user data between the 3GPP access network element and the user equipment.

15. The method according to claim 14, wherein,
the 3GPP access network element performing traffic offload on the downlink user data, to offload part of the downlink user data to the WLAN access network element, comprises:
after the 3GPP access network element performs traffic offload on the downlink user data sent by the core network, sending at least part of the downlink user data to the WLAN access network element through the traffic offload interface;
the WLAN access network element transmitting the downlink user data between the 3GPP access network element and the user equipment, comprisies:
the WLAN access network element sending the downlink user data received from the traffic offload interface to the user equipment.

16. The method according to claim 15, further comprising:
the 3GPP access network element sending part of the downlink user data which are not sent to the WLAN access network element through the traffic offload interface to the user equipment through an interface with the user equipment.

17. The method according to claim 15, wherein,
the 3GPP access network element sending at least part of the downlink user data to the WLAN access network element through the traffic offload interface, comprises:
the 3GPP access network element encapsulating at least part of downlink user data with a format of an Ethernet transmission protocol or a transmission protocol based on wireless connection, and sending to the WLAN access network element through the traffic offload interface.

18. The method according to claim 14, wherein,
the 3GPP access network element performing traffic offload on the downlink user data, comprises:
the 3GPP access network element performing traffic offload on the downlink user data at an IP layer, or a packet data convergence protocol layer, or a radio link control layer or a media access control (MAC) layer.

19. The method according to any one of claims 14∼18, wherein,
the 3GPP access network element performing traffic offload on the downlink user data, comprises:
the 3GPP access network element performing traffic offload on the downlink user data according to any one or any combination of a payload of the present user equipment, a payload of the WLAN access network element, quality of wireless environment where the user equipment is located or other preconfigured algorithms.

20. The method according to claim 14, wherein,
the WLAN access network element transmitting the uplink user data between the 3GPP access network element and the user equipment, comprises:
the WLAN access network element sending the received uplink user data sent by the user equipment to the 3GPP access network element;
the 3GPP access network element merging the received uplink user data, comprises:
the 3GPP access network element merging the uplink user data sent by the user equipment and the uplink user data sent by the WLAN access network element, which belong to a same data source.

21. The method according to claim 14, further comprising:
the 3GPP access network element transmitting control plane signaling between the core network element and the user equipment directly.

22. A method for implementing multi-network joint transmission, applied at a user equipment side, wherein, the user equipment has a Wireless Local Area Network (WLAN) access function and at least one of 3rd Generation Partnership Project (3GPP) wireless access functions, and the method comprises:
receiving downlink user data sent by a 3GPP access network element through a 3GPP wireless interface, and receiving downlink user data sent by a WLAN access network element through a WLAN wireless interface;
merging the received downlink user data sent by the 3GPP access network element and the WLAN access network element;
performing traffic offload on uplink user data to be sent; and
sending part of the uplink user data offloaded by the offloading module to the 3GPP access network element, and sending other part of the uplink user data to the WLAN access network element.

23. The method according to claim 22, wherein,
performing traffic offload on uplink user data to be sent comprises:
performing traffic offload on the uplink user data at an IP layer, or a packet data convergence protocol layer, or a radio link control layer or a media access control (MAC) layer.

24. The method according to claim 22 or 23, wherein,
performing traffic offload on the uplink user data to be sent comprises:
performing traffic offload on the uplink user data to be sent according to a locally preconfigured offload policy or an offload policy configured for the present user equipment by the 3GPP access network element.

25. The method according to claim 22, further comprising:
receiving control plane signaling sent by the 3GPP access network element directly.
